Europäisches Patentamt

European Patent Office

Office européen des brevets

(19)

(11) **EP 0 652 417 B1**

(12) **EUROPÄISCHE PATENTSCHRIFT**

(45) Veröffentlichungstag und Bekanntmachung des Hinweises auf die Patenterteilung:
**27.08.1997 Patentblatt 1997/35**

(51) Int Cl.6: **G01C 19/72**

(21) Anmeldenummer: **93117510.3**

(22) Anmeldetag: **28.10.1993**

(54) **Faseroptisches Sagnac-Interferometer zur Drehratenmessung mit wellenlängenstabilisierter Lichtquelle**

Fibre optic sagnac interferometer for rotation rate measurement with wavelength-stabilised light source

Interféromètre du type sagnac à fibre optique pour mesurer la vitesse de rotation avec source lumineuse à longueur d'onde stabilisée

(84) Benannte Vertragsstaaten:
**DE FR GB IT**

(43) Veröffentlichungstag der Anmeldung:
**10.05.1995 Patentblatt 1995/19**

(73) Patentinhaber: **LITEF GmbH**
**79115 Freiburg (DE)**

(72) Erfinder: **Kemmler, Manfred**
**D-79277 Vörstetten (DE)**

(74) Vertreter: **Müller, Frithjof E., Dipl.-Ing.**
**Patentanwälte**
**MÜLLER & HOFFMANN,**
**Innere Wiener Strasse 17**
**81667 München (DE)**

(56) Entgegenhaltungen:
**EP-A- 0 441 998          EP-A- 0 460 268**

**Beschreibung**

Die Erfindung betrifft ein faseroptisches Sagnac-Interferometer zur Drehratenmessung, bei dem entsprechend EP-0 441 998 A1

- zwei aus einer Lichtquelle stammende, durch einen Polarisator polarisierte und durch Strahlteilung erzeugte Lichtstrahlen in entgegengesetzten Richtungen in eine Faserspule eingestrahlt und anschließend wiedervereinigt werden,
- das entstehende Interferenzbild nach Durchlauf durch den Polarisator eine Detektoreinrichtung beaufschlagt, deren Ausgangssignal der Lichtintensität des Interferenzbilds entspricht,
- die beiden Lichtstrahlen mittels eines nach der Strahlteilung und vor der Faserspule liegenden Phasenmodulators durch ein aus mehreren variablen Anteilen zusammengesetztes, durch eine Modulo-Operation auf einen Wert von $2\pi$ begrenztes Signal moduliert werden, wobei
- ein erster Signalanteil ein über einen Integrationsprozeß erzeugtes Rampensignal ist, welches nichtreziproke in-kremental Phasenverschiebungen der beiden Lichtstrahlen kompensiert,
- ein zweiter Signalanteil einen ganzzahligen positiven Wert von $\pi/2$ jeweils für eine Zeit $t_0$ mit $t_0$ = Laufzeit jedes der Lichtstrahlen durch die Faserspule im Ruhezustand darstellt, der sich aus der Summe zweier Anteile zusammensetzt, von denen

  -- der erste Anteil aus wechselweise aufeinanderfolgenden Werten 0 und $\pi/2$ gebildet ist, und
  -- der zweite Anteil aus weitgehend korrelationsfrei aufeinanderfolgenden Werten 0 und $\pi$ gebildet ist,

- das Detektorsignal mit einem Synchrondemodulator demoduliert wird, der angesteuert wird mit dem Produkt aus vier Faktoren, von denen

  -- der erste Faktor konstant den Wert -1 hat,
  -- der zweite Faktor -1 ist, wenn der zweite Anteil den Wert 0 hat, jedoch +1 ist, wenn der zweite Anteil den Wert $\pi$ hat,
  -- der dritte Faktor -1 ist, wenn der zweite Anteil aus dem letzten vorhergehenden Modulationstakt den Wert 0 hatte, jedoch +1 ist, wenn der zweite Anteil aus dem vorhergehenden Modulationstakt den Wert $\pi$ hatte,
  -- der vierte Faktor -1 ist, wenn der erste Anteil den Wert 0 hat, jedoch +1 ist, wenn der erste Anteil den Wert $\pi/2$ hat.

Faseroptische Drehratensensoren dieser Gattung mit durch einen Zufallsgenerator gesteuerter statistischer Modulation für das Ansteuersginal eines Phasenmodulators haben den Vorteil, daß die durch elektromagnetische Überkopplungen verursachten Bias-Fehler und daraus folgende empfindlichkeitsbereiche vermieden werden, die bei allen Drehratensensoren dieser Gattung mit entsprechender Güteanforderung ein inhärentes Problem sind.

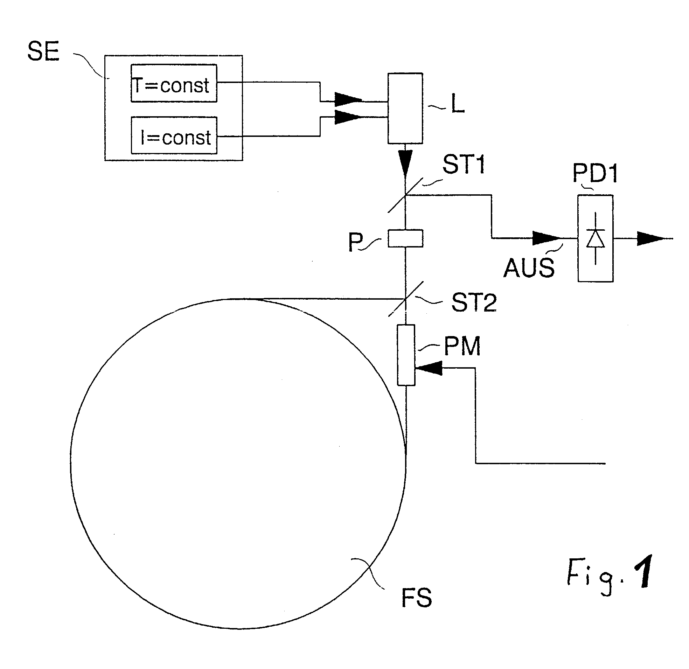

Bei der Messung nichtreziproker, durch Drehung verursachter Phasenverschiebungen in einem faseroptischen Sagnac-Interferometer ist die Größe des Meßsignals für eine gegebene Eingangsdrehrate umgekehrt proportional zur Wellenlänge der Lichtquelle. Deshalb ist man bemüht, die Wellenlänge der Lichtquelle zu stabilisieren, z. B. dadurch (vergleiche Fig. 1), daß die Lichtquelle L mit einer Stabilisierungselektronik SE, die den Injektionsstrom I und/oder die Temperatur T konstant hält, betrieben wird. Die übrigen Baugruppen des in Fig. 1 nur teilweise dargestellten faseroptischen Sagnac-Interferometers oder Drehratensensors sind dem Fachmann geläufig, nämlich ein von der Lichtquelle L bestrahlter Strahlteiler ST1 mit nachgeordnetem Polarisator P, einem weiteren Strahlteiler ST2, an dem der polarisierte Lichtstrahl in zwei gleiche Teillichtstrahlen aufgeteilt und in die beiden Enden einer Faserspule FS eingestrahlt wird, in deren einem Zweig ein Phasenmodulator PM liegt. Die beiden Teillichtstrahlen werden nach Durchlaufen der Faserspule FS am zweiten Strahlteiler ST2 wiedervereinigt, wobei das dabei entstehende Interferenzbild aufgrund einer durch Drehung der Faserspule FS entstandenen Phasenverschiebung zwischen den beiden Teillichtstrahlen am Strahlteiler ST1 ausgekoppelt wird und in bekannter Weise einen Photodetektor PD1 beaufschlagt.

Eine weitere Möglichkeit, die Wellenlänge der Lichtquelle L zu stabilisieren besteht darin (vgl. EP 0 460 268 A1), mit einem zusätzlichen unbalancierten Meßinterferometer MI (vgl. Fig. 2), das von einem am ersten Strahlteiler ST1 abgezweigten Teil des Lichts durchstrahlt wird, die Wellenlänge mittels eines zusätzlichen Detektors PD2 direkt zu messen, und daraus ein Regelsignal zur Stabilisierung der Wellenlänge der Lichtquelle L abzuleiten.

Ein prinzipieller Nachteil der ersten Methode ist, daß die Wellenlänge nur indirekt stabilisiert wird und eventuelle Alterungseffekte nicht erfaßt werden. Bei der zweiten Methode mittels zusätzlichem Meßinterferometer ist ein nicht unerheblicher zusätzlicher Hardwareaufwand erforderlich, obwohl die direkte Messung grundsätzliche Vorteile hat.

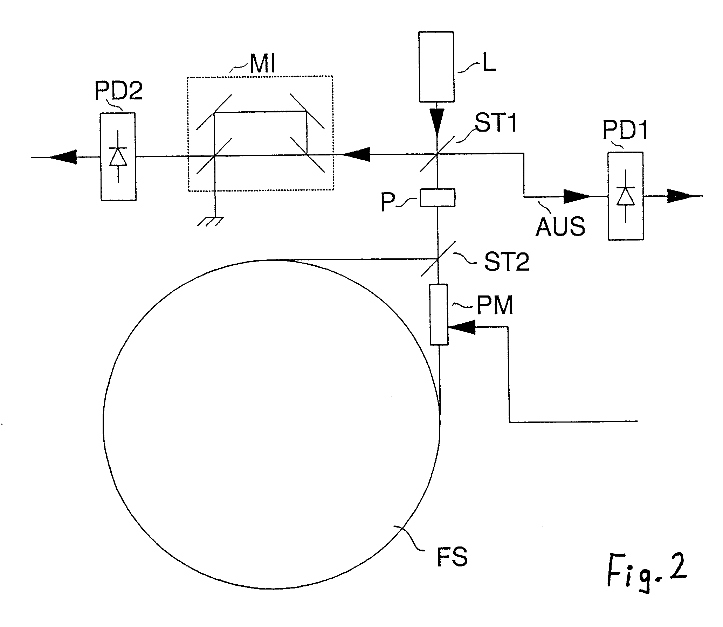

Der Erfindung liegt die Aufgabe zugrunde, die Vorteile der direkten Messung der Wellenlänge der Lichtquelle eines faseroptischen Sagnac-Interferometers zu nutzen, ohne daß der anhand der Fig. 2 erwähnte zusätzliche Hardware-

EP 0 652 417 B1

aufwand mit einem separaten Meßinterferometer benötigt wird.

Die Erfindung ist bei einem faseroptischen Sagnac-Interferometer zur Drehratenmessung nach dem Oberbegriff des Patentanpruchs 1 wie oben definiert dadurch gekennzeichnet, daß

- ein Teil der Lichtstrahlen nach der Strahlteilung und der Phasenmodulation reflektiert wird und diese Lichtstrahlenanteile ebenfalls wiedervereinigt werden und nach Durchlaufen des Polarisators die tektoreinrichtung beaufschlagen,
- das Detektorsignal zusätzlich mit einem zweiten Synchrondemodulator demoduliert wird, der mit dem Produkt aus zwei Faktoren angesteuert wird, von denen
- der erste Faktor - 1 ist, wenn der zweite Anteil des zweiten Signalanteils des Modulationssignals den Wert 0 hat, jedoch + 1 ist, wenn dieser zweite Anteil den Wert $\pi/2$ hat,
- der zweite Faktor -1 ist, wenn das Rampensignal einen Wert zwischen 0 und einschließlich $\pi/2$ oder zwischen $\pi$ und einschließlich $3\pi/2$ hat, jedoch +1 ist, wenn das Rampensignal einen Wert zwischen $\pi/2$ und einschließlich $\pi$ oder zwischen $3\pi/2$ und einschließlich $2\pi$ hat,
- das mittels des zweiten Synchrondemodulators demodulierte Signal genutzt wird, um die Wellenlänge der Lichtquelle durch Änderung der Lichtquellentemperatur und/oder des Lichtquelleninjektionsstroms zu variieren.

Für einen kompakten Aufbau in möglichst weitgehend integrierter Optik ist es vorteilhaft, die Strahlteilung und Modulation auf einem integriert optischen Chip zu vereinigen, das gleichzeitig als zusätzliches Meßinterferometer dient und an dessen beiden Ausgängen jeweils ein Ende der Faserspule angeschlossen ist, wobei die Reflexion an den stirnseitigen Übergangsstellen vom integriert optischen Chip zur Faserspule auftritt.

Das mittels des zweiten Synchrondemodulators demodulierte Signal dient bei einer vorteilhaften Ausführungsform der Erfindung als Steuersignal für eine Kompensationsrechnung in einem übergeordneten Rechnersystem zur Bestimmung der Temperatur- und/oder Kompensationsstromänderung für die Lichtquelle.

Bei Verwendung eines integriert optischen Chips wird zur Bildung des Meßinterferometers eine geringe Wegdifferenz der beiden durch die Strahlteilung erzeugten Lichtstrahlen durch Anschrägen der Übergangsstelle vom integriert optischen Chip zur Faserspule eingebracht. Mißt man die Temperatur des Meßinterferometers, also des integrierten optischen Chips, so kann der Temperaturmeßwert zur Korrektur des über den zweiten Synchrondemodulator gewonnenen Meßsignals im übergeordneten Rechnersystem verwendet werden.

Die Erfindung läßt sich, sofern ein faseroptisches Sagnac-Interferometer zur Drehratenmessung in Open-Loop-Konfiguration betrieben wird, vorteilhaft zur Skalenfaktorkompensation einsetzen. Für diesen Anwendungsfall ist ein faseroptisches Sagnac-Interferometer zur Drehratenmessung, bei dem

- zwei aus einer Lichtquelle stammende, durch einen Polarisator polarisierte und durch Strahlteilung erzeugte Lichtstrahlen in entgegengesetzten Richtungen in eine Faserspule eingestrahlt und anschließend wiedervereinigt werden,
- das entstehende Interferenzbild nach Durchlauf durch den Polarisator eine Detektoreinrichtung beaufschlagt, deren Ausgangssignal der Lichtintensität des Interferenzbilds entspricht,
- die beiden Lichtstrahlen mittels eines nach der Strahlteilung und vor der Faserspule liegenden Phasenmodulator moduliert werden,
- das verstärkte Photodetektorausgangssignal einem ersten Synchrondemodulator zugeführt wird,
- das den Phasenmodulator beaufschlagende Modulationssignal aus der Summe von zwei Anteilen gebildet ist, von denen der erste Anteil aus wechselweise aufeinanderfolgenden Werten Null und $\pi/2$ und der zweite Anteil aus weitgehend korrelationsfrei aufeinanderfolgenden Werten Null und $\pi$ gebildet ist,
- der erste Synchrondemodulator mit dem Produkt aus vier Faktoren angesteuert ist, von denen

-- der erste Faktor konstant den Wert -1 hat,
-- der zweite Faktor - 1 ist, wenn der zweite Anteil den Wert Null hat, jedoch +1 ist, wenn der zweite Anteil den Wert $\pi$ hat,
-- der dritte Faktor -1 ist, wenn der zweite Anteil aus dem letzten, vorhergehenden Modulationstakt den Wert Null hatte, jedoch +1 ist, wenn der zweite Anteil aus dem vorhergehenden Modulationstakt den Wert $\pi$ hatte, und
-- der vierte Faktor - ist, wenn der erste Anteil den Wert Null hat, jedoch +1 ist, wenn der erste Anteil den Wert $\pi/2$ hat,

erfindungsgemäß **dadurch gekennzeichnet**, daß
- ein Teil der Lichtstrahlen nach der Strahlteilung und der Phasenmodulation reflektiert wird und diese Lichtstrahlanteile ebenfalls wiedervereinigt werden und nach Durchlauf durch den Polarisator die Detektoreinrichtung beauf-

3

schlagen,

- das Ausgangssignal der Detektoreinrichtung zusätzlich mit einem zweiten Synchrondemodulator demoduliert wird, der mit dem Produkt aus zwei Faktoren angesteuert ist, von denen

-- der erste Faktor -1 ist, wenn der erste Anteil (AT21) den Wert 0 hat, jedoch +1 ist, wenn der erste Anteil (AT21) den Wert $\pi/2$ hat,

-- der zweite Faktor -1 ist, wenn das Rampensignal (AT1) einen Wert zwischen 0 und einschließlich $\pi/2$ oder zwischen $\pi$ und einschließlich $3\pi/2$ hat, jedoch +1 ist, wenn das Rampensignal (AT1) einen Wert zwischen $\pi/2$ und einschließlich $\pi$ oder zwischen $3\pi/2$ und einschließlich $2\pi$ hat,

und daß

- das mittels des zweiten Synchrondemodulators (SYNCD2) demodulierte Signal (S2) als Faktor für eine rechnerische Kompensation des Interferometer-Skalenfaktors benutzt wird.

Die Erfindung und vorteilhafte Ausführungsformen werden nachfolgend unter Bezug auf die Zeichnungen in weiteren Einzelheiten erläutert. Es zeigen:

Fig. 1    den bereits erläuterten Teilabschnitt eines Drehratensensors mit elektronischer Wellenlängenstabilisierung für die Lichtquelle;

Fig. 2    den ebenfalls bereits erläuterten Teilabschnitt eines faseroptischen Drehratensensors mit direkter Messung der Wellenlänge der Lichtquelle über ein separates Michelson-Interferometer mit bestimmten temperaturinvarianten Eigenschaften (vgl. EP-0 460 268 AI);

Fig. 3    den Prinzipaufbau eines faseroptischen Drehratensensors mit mehrfach genutztem integriert optischen Chip und deterministischer Modulation des im Chip integrierten Phasenmodulators;

Fig. 4    eine der Darstellung der Fig. 3 entsprechende Prinzipdarstellung bei statistisch variabler Modulation, bei der sich der mehrfach genutzte integrierte optische Chip gleichzeitig gemäß der Erfindung als Michelson-Interferometer zur Gewinnung eines lichtwellenlängenabhängigen Signals nutzen läßt;

Fig. 5    die Prinzipdarstellung eines mehrfach genutzten, integriert optischen Chips mit leicht angeschrägter Endfläche an der Austrittsseite der beiden Teillichtstrahlen zur Gewinnung eines Lichtwegunterschieds;

Fig. 6    das Funktions-Blockschaltbild eines (zweiten) Synchrondemodulators für das erfindungsgemäße Michelson-Interferometersignal;

Fig. 7    den Prinzipaufbau eines mehrfach genutzten, integriert optischen Chips mit temperaturstabilem Michelson-Interferometer gemäß einer vorteilhaften Ausführungsform der Erfindung;

Fig. 8    das Funktionsblockschaltbild eines faseroptischen Sagnac-Interferometers in Closed-Loop-Konfiguration mit digitaler Phasenrampenrückstellung und statistisch unabhängiger Erzeugung des Ansteuersignals für den Phasenmodulator bei gleichzeitiger Nutzung des integrierten optischen Chips als Michelson-Interferometer zur Gewinnung eines lichtwellenlängenabhängigen Signals zur Temperatur- und/oder Injektionsstromregelung für die Lichtquelle;

und

Fig. 9A bis 9C    typische Signalverläufe an gekennzeichneten Punkten der Schaltungsanordnung der Fig. 8 bei verschiedenen Betriebszuständen des faseroptischen Drehratensensors, nämlich

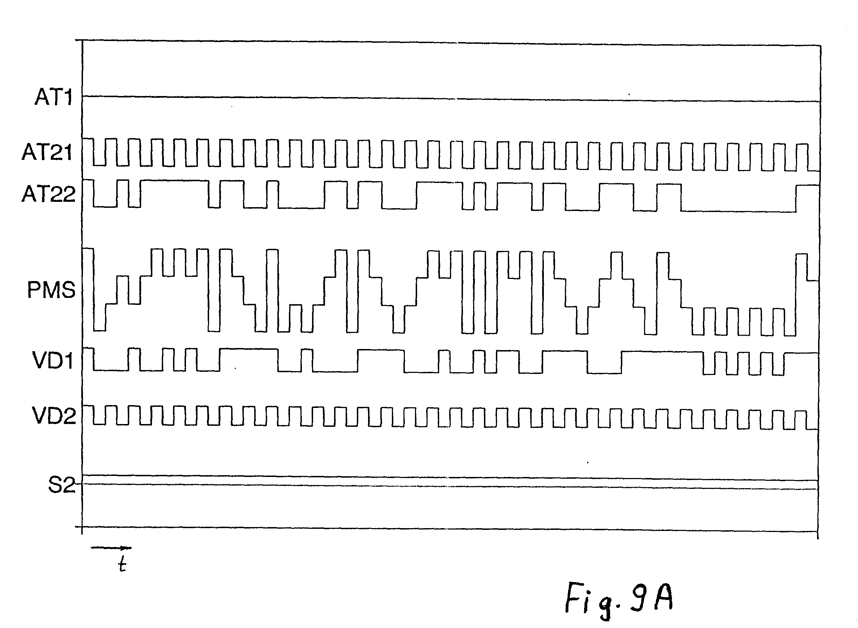

Fig. 9A    Signalverläufe bei Ruhelage des Drehratensensors, d.h. ohne Rampensignal, jedoch bei Ablage des Interferometers;

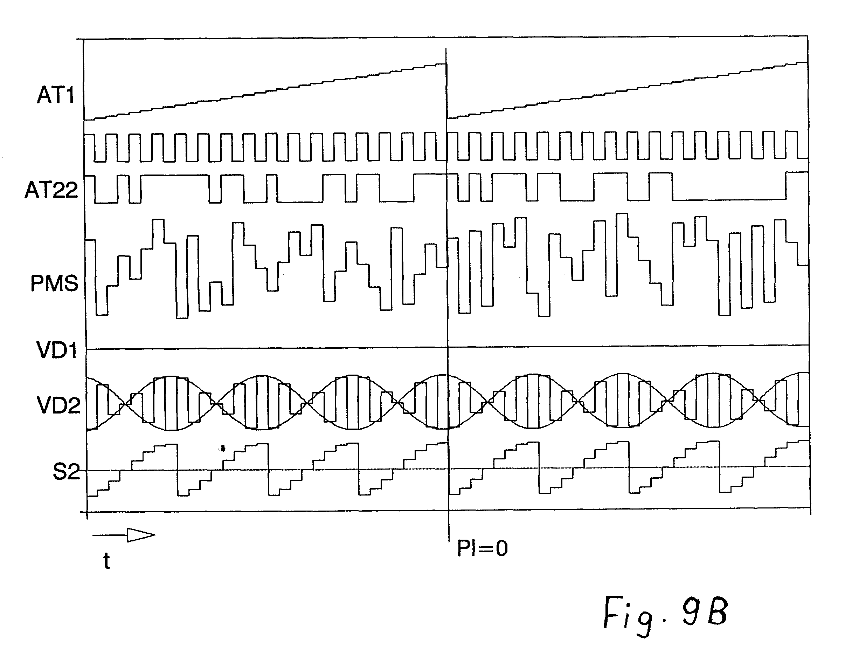

Fig. 9B    die entsprechenden Signalverläufe bei vorhandener Drehrate, also mit Rampensignal, jedoch bei stabiler Lichtwellenlänge, also ohne Ablage des Michelson-Interferometers, und

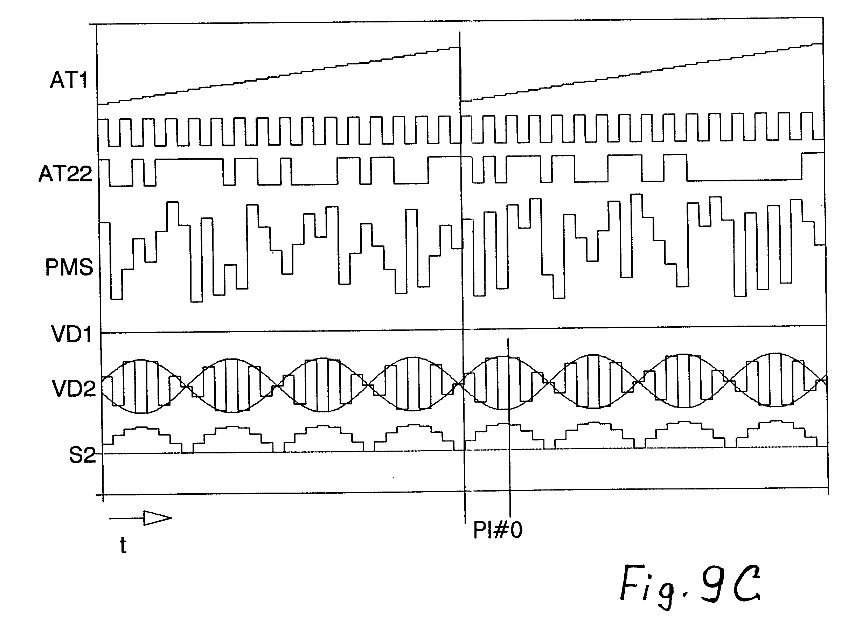

Fig. 9C    die entsprechenden Signalverläufe bei vorhandener Drehrate, also mit Rampensignal und nachzuregelnder Wellenlänge der Lichtquelle, d.h. mit Ablage des Michelson-Interferometers.

Zunächst wird das grundsätzliche Funktionsprinzip eines Meßinterferometers nach Michelson beschrieben. Hinsichtlich mathematischer Zusammenhänge und einer ausführlichen Beschreibung wird jedoch zusätzlich auf EP 0 460 268 A1 Bezug genommen. Im Anschluß daran wird die erfindungsgemäße Einbindung eines solchen Michelson-Interferometers in ein bekanntes Sagnac-Interferometer zur Drehratenmessung beschrieben.

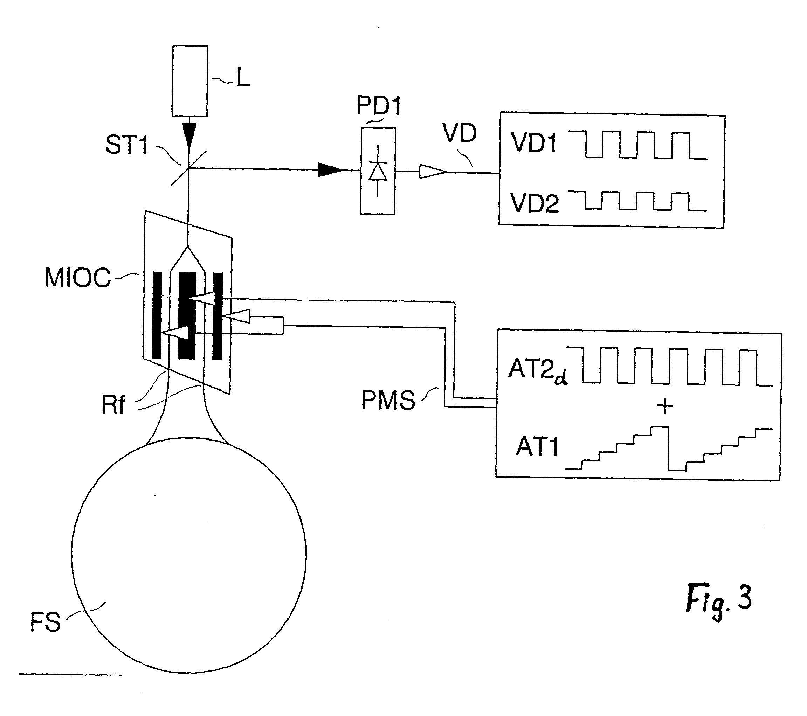

In einem Michelson-Interferometer werden im allgemeinen zwei aus einer Lichtquelle stammende Lichtstrahlen durch Strahlteilung erzeugt, gegeneinander phasenverschoben, wiedervereinigt und beaufschlagen als Interferenzbild ferenzbild einen Photodetektor. Dabei ist das der Lichtintensität des entsprechende Detektorsignal VD2 (vgl. Fig. 3) proportional zur Kosinusfunktion der Phasenverschiebung θ, d.h. VD2 ~ cos(θ) . Die Phasenverschiebung in dem Interferometer ist dabei gegeben durch

$$\theta = 2 \cdot \pi \cdot n_1 \cdot 1/\lambda,$$

wobei mit $n_1$ der Brechungsindex des lichtführenden Interferometers, mit 1 der geometrische Wegunterschied der beiden durch Strahlteilung gewonnenen Lichtstrahlen, und mit λ die Wellenlängen des Lichts bezeichnet sind.

Ersichtlicherweise ist λ für 1 > 0 abhängig von der Wellenlänge, wobei die absolute Änderung der Phasenverschiebung mit zunehmendem 1 zunimmt. Das Detektorsignal VD2 kann also prinzipiell zur Bestimmung der Wellenlänge der Lichtquelle L genutzt werden.

Zum Messen nichtreziproker Phasenverschiebungen in einem faseroptischen Sagnac-Interferometer ist es bekannt (vgl. Lefèvre et al. in Guided Optical Structures in Military Environment (AGARD-CP-383) Istanbul, 23-27 Sept. 1985 p 9A/(1-13), daß die Funktionen des Polarisators P (vgl. Fig. 1), des zweiten Strahlteilers ST2 und des Phasenmodulators PM auf einem integriert optischen Chip, z. B. auf der Basis von Lithium-Niobate vereinigt werden können. Ein solcher mehrfach genutzter Integriert optischer Chip wird nachfolgend als MIOC bezeichnet. Bei Anwendung von deterministischer Modulation $AT2_d$ des innerhalb des MIOC enthaltenen Phasenmodulators ist streng darauf zu achten, daß die Reflexionen Rf an den Übergängen vom MIOC zur Faserspule Fs nicht in den Wellenleiter zurückreflektiert werden, da diese ein parasitäres Michelson-Interferometer im MIOC aufbauen würden, dessen Signal VD2 am Photodetektor PD1 nicht vom eigentlichen Meßsignal VD1 des Sagnac-Interferometers unterschieden werden könnten, was im oberen Teil der Fig. 3 veranschaulicht ist. Das Signal VD des Photodetektors PD1 setzt sich zwar aus den beiden Signalanteilen VD1 und VD2 zusammen; diese beiden Signalanteile lassen sich jedoch nicht voneinander trennen und also auch nicht voneinander unterscheiden.

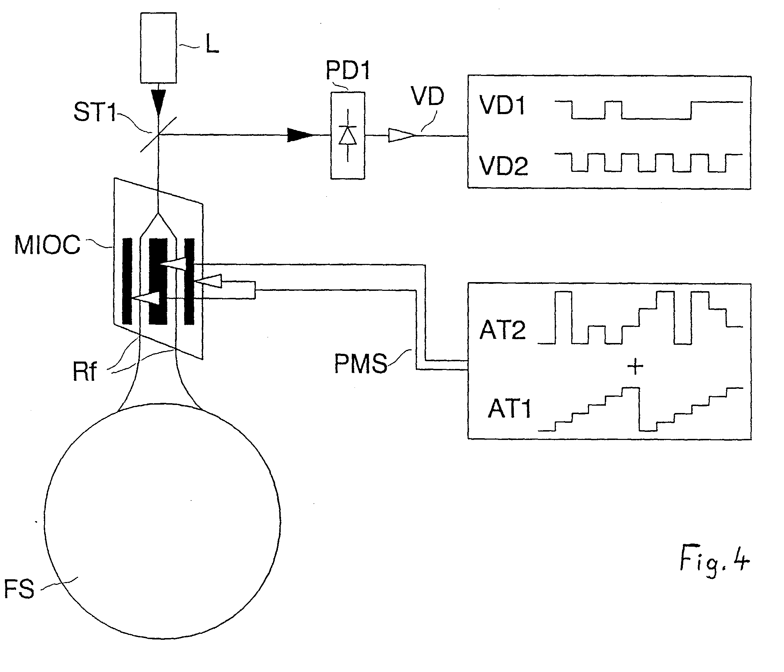

Nun ist es aus EP 0 441 998 A1 bekannt (vgl. auch Prinzipdarstellung der beigefügten Fig. 4), daß durch statistische Modulation AT2 des Phasenmodulators mit einem Signal m(n) = s(n) · π/2 + r(n) · π, mit z. B. s(n) = 0 für n gerade, s (n) = 1 für n ungerade und r(n) statistisch wechselnd zwischen 0 und 1, synchrone Einstreuungen des Modulatorsignals PMS auf den Detektor PD1 statistisch unabhängig sind vom Nutzsignal VD1. Zusätzlich ist aber auch das Signal VD2 des parasitären Michelson-Interferometers statistisch unabhängig, wie im folgenden gezeigt wird. Die Erfindung nutzt also einen ursprünglich unerwünschten Effekt, um ein Meßsignal zur Stabilisierung der Wellenlänge der Lichtquelle L zu gewinnen.

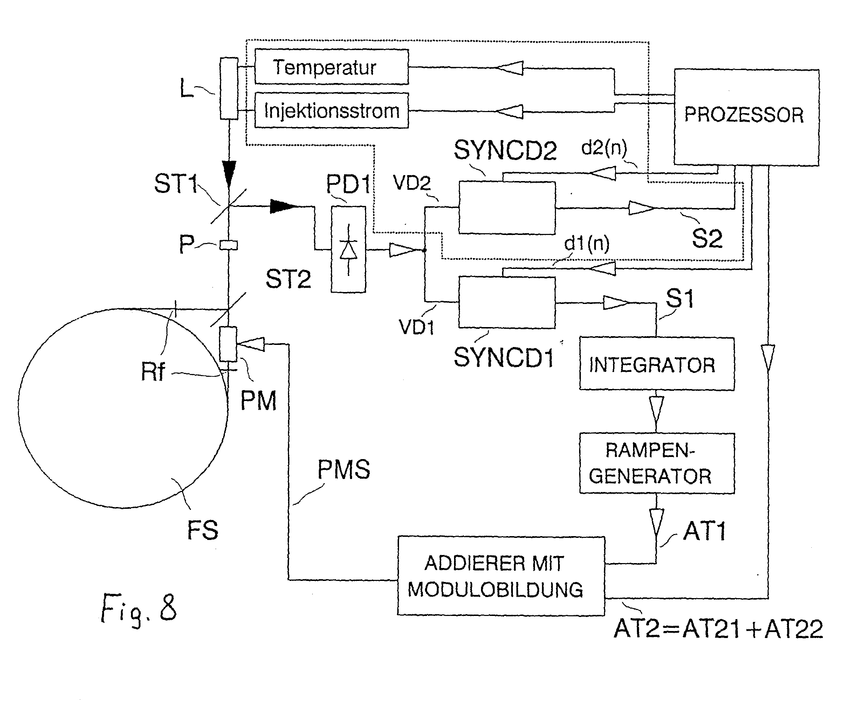

Da die beiden Lichtstrahlen, die an der Grenzfläche zwischen dem MIOC und der Faserspule FS reflektiert werden, zweimal den Phasenmodulator PM (innerhalb des MIOC) im gleichen Zustand passieren. erfahren sie eine Phasenverschiebung, die doppelt so groß ist wie die, die die beiden in die Faserspule FS eingekoppelten Lichtstrahlen erfahren. Damit ergibt sich also die Phasenverschiebung p(n) für n gerade zu p(n) = r(n) · 2π und für n ungerade zu p(n) = π + r(n) · 2π. Da das Interferenzsignal der im Strahlteiler ST2 (innerhalb des MIOC) vereinigten reflektierten Lichtstrahlen proportional ist zu cos (p(n) + θ), wobei θ eine modulationsunabhängige Phasenschiebung im Michelson-Interferometer ist, fällt der Modulationsanteil r(n) · 2π wegen der 2π-Periodizität des Kosinus heraus und das Interferenzsignal ist proportional zu cos(θ) für n gerade und cos(p + π) = -cos(θ) für n ungerade und ist damit mit s(n) demodulierbar und statistisch unabhängig vom Sagnac-Interferometersignal VD1 bzw. S1 (vgl. Figuren 4 und 8). Das mit s(n) bzw. (2s (n)-1) demodulierte Signal S2 liefert ein zu θ proportionales Signal und wie oben beschrieben auch zur Wellenlänge λ proportionales Signal.

Neben der Reflexion beim Übergang vom MIOC zur Faserspule tritt auch eine Reflexion am Übergang von der Faserspule zum MIOC auf. Diese Reflexion betrifft die Lichtstrahlen, die die Faserspule FS durchlaufen haben. Die hier reflektierten Lichtstrahlen durchlaufen ein weiteres Mal die Faserspule FS und passieren, eine Zeit $2t_0$ nach ihrem erstmaligen Passieren des Phasenmodulators, ein weiteres Mal den Phasenmodulator und erzeugen ein zusätzliches Interferrometersignal am Detektor PD1. Wegen des zweimaligen Passierens des Phasenmodulators ist die Phasenverschiebung p(n) dieser Lichtwellen die Summe aus der Phasenverschiebung z.Z. $n \cdot t_0$ und der zur Zeit $(n-2) \cdot t_0$ und ergibt sich zu

$$p(n) = (r(n) + r(n-2)) \cdot \pi + (s(n) + s(n-2)) \cdot \pi/2.$$

Da s(n) = s(n-2) ist, ergibt sich für n gerade

$$p(n) = (r(n) + r(n-2)) \cdot \pi$$

und für n ungerade

$$p(n) = (r(n) + r(n-2)) \cdot \pi + \pi.$$

Das Interferometersignal wird dadurch

$$\cos((r(n) + r(n-2) + s(n)) \cdot \pi + \theta) = (2 \cdot r(n)\text{-}1) \cdot (2 \cdot r(n-2)\text{-}1) \cdot (2 \cdot s(n)\text{-}1) \cdot \cos(\theta).$$

Dieses Signal ist wiederum statistisch unabhängig vom Sagnac-Interferometersignal und vom ersten Michelson-Interferometersignal.

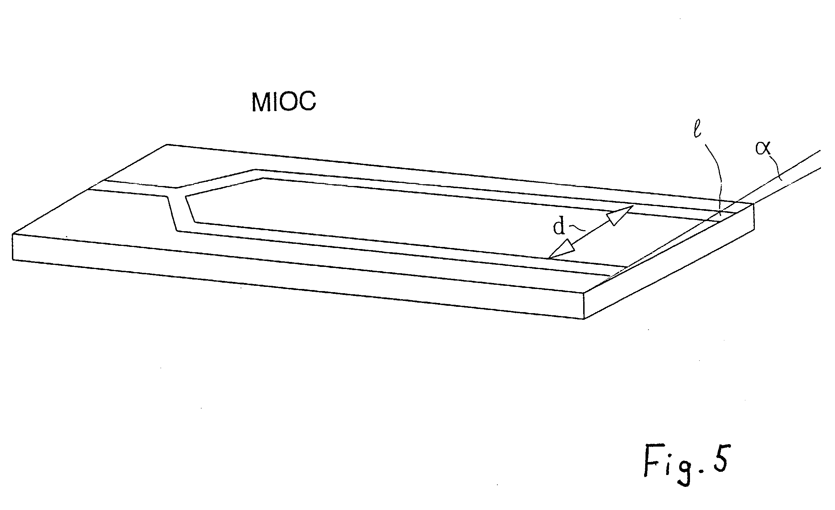

Um ein genügend großes Meßsignal zu erhalten, muß der Wegunterschied zwischen den beiden reflektierten Lichtwellen so groß wie möglich gemacht werden. Außerdem ist es sinnvoll, den Wegunterschied für eine gegebene Wellenlänge so zu wählen, daß $\theta = n \cdot \pi$ wird, so daß das demodulierte Interferometersignal Null ist, und aus dem Vorzeichen des demodulierten Signals auf eine Weglängenzunahme oder -abnahme geschlossen werden kann. Wie die Fig. 5 zeigt, kann der Wegunterschied z. B. durch leichtes Anschrägen der MIOC-Endfläche auf der Seite der Faserspule FS um einen Winkel $\alpha$ eingebracht werden, wobei darauf geachtet werden muß, daß noch genügend Lichtintensität der reflektierten Lichter im Wellenleiter eingekoppelt wird und daß der Wegunterschied geringer ist als die Kohärenzlänge der Lichtquelle. Folgende Beispielrechnung zeigt eine typische Konfiguration (vgl. Fig. 5):

$$1 = 2 \cdot \sin(\alpha) \cdot d$$

mit

d =     Abstand der Ausgangsarme des Strahlteilers innerhalb des MIOC, ca. 300 μm

$\alpha$ =     Anschrägwinkel

Für $\alpha = 1°$ ergibt sich $1 = 2 \cdot \sin(1°) \cdot 300\ \mu m = 10.47\ \mu m$.

Das demodulierte Signal des Michelson-Interferometers wird damit für kleine Abweichungen von der Sollwellenlänge $\lambda_0$ bei Annahme eines Brechungsindexes für Lithium-Niobate $n_{LiNbO_3} = 2.3$:

$$S2 = (2.3 \cdot 10.47/\lambda_0) \cdot (1\text{-}\lambda_0/\lambda) = 29 \cdot (1\text{-}\lambda_0/\lambda)\ ,$$

wobei $\lambda_0 = 830$ nm angenommen wird.

Das demodulierte Signal S2 wird nun erfindungsgemäß dazu genutzt, die Wellenlänge $\lambda$ der Lichtquelle L durch Temperatur-und/oder Injektionsstromänderung zu stabilisieren oder als Maß für die Wellenlängenänderung in einem übergeordneten Rechnersystem bei der Kompensation von Skalenfaktorfehlern zu nutzen.

Für die Kompensation von Skalenfaktorfehlern ist dabei folgendes zu beachten:

Wie oben erwähnt, ist der Skalenfaktor des Drehratenmeßsignals umgekehrt proportional zur Wellenlänge $\lambda$ der Lichtquelle. Durch Messung der Wellenlängenänderung mittels des Signals S2 können daher Änderungen des Skalenfaktors kompensiert werden, wenn die Wellenlänge als solche nicht mit S2 stabilisiert wird. Ein solches Verfahren böte sich insbesondere für ein Open-Loop-Verfahren zur Skalenfaktorstabilisierung an. In Fig. 8 würden dann die Funktionsblöcke "Temperatur" und "Injektonsstrom" entfallen und dafür würde hinsichtlich der Drehrate im Prozessor ein Rechenschritt $(k_1 \cdot S1) \cdot (1\text{-}k2 \cdot S2)$ durchgeführt werden, wobei mit $k_1$ der Skalenfaktor bei der Sollwellenlänge und mit k2 ein Proportionalitätsfaktor bezeichnet sind.

Zu beachten ist, daß die reflektierten Lichtstrahlen, wenn das Sagnac-Interferometer in einem Closed-Loop-Verfahren betrieben wird, wie es die Fig. 8 veranschaulicht, auch durch das Rampensignal AT1 (vgl. Fig. 9B und 9C), das die nichtreziproke Phasenverschiebung bei Drehung kompensiert, phasenverschoben werden. Da durch die Rampe alle Phasenverschiebungen im Michelson-Interferometer zwischen 0 und $4\pi$ gleichverteilt vorkommen, ist das mit s(n) demodulierte Signal S2 ein periodisches Signal, dessen Amplitude konstant ist, dessen Phasenlage P1 zum Rampensignal aber linear von der Phasenschiebung θ abhängt.

Diese Phasenlage P1 kann zum Beispiel durch einen weiteren dem zweiten Synchrondemodulator SYNCD2 nachgeschalteten Synchrondemodulator, dessen Modulationsvorzeichen zum Beispiel jeweils bei Rampenwerten von Vielfachen von π/2 wechselt, gewonnen werden. Das Demodulationsvorzeichen kann bei Schaltungen, in denen das Rampensignal digital erzeugt wird und der jeweilige Rampenwert durch eine binäre Zahl repräsentiert wird, aus dem Bit $b_{\pi/2}(n)$, das den Rampenwert π/2 repräsentiert, gewonnen werden.

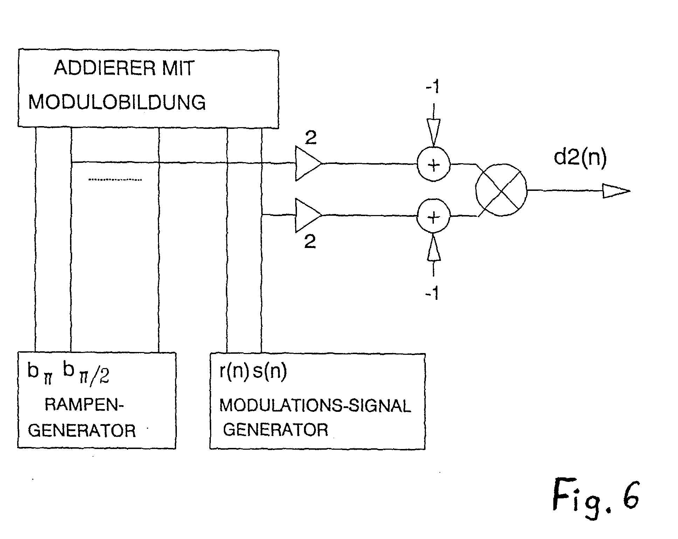

Die beiden Synchrondemodulatoren SYNCD1 und SYNCD2, die das Michelson-Interferometersignal demodulieren, lassen sich zusammenfassen zu einem Synchrondemodulator, der angesteuert wird vom Produkt der beiden oben beschriebenen einzelnen Ansteuersignale. Mathematisch läßt sich dieses Ansteuersignal d2(n) wie folgt ausdrücken (vgl. Fig. 6):

$$d2(n) = (2 \cdot s(n)\text{-}1) \cdot (2 \cdot b_{\pi/2}(n)\text{-}1)$$

Weiterhin ist zu beachten, daß die zu messende Phase θ auch vom Brechungsindex n des Materials des MIOC und dem geometrischen Wegunterschied 1 der beiden reflektierten Lichter abhängt und somit also auch von deren Variation durch Temperatureinflüsse. Diese Schwierigkeit kann durch die Messung der Temperatur des Lichtwegs und eine entsprechende Korrektur des Meßsignals umgangen werden. Im Gegensatz zur Lichtquelle L spielen hier jedoch Alterungseffekte keine Rolle.

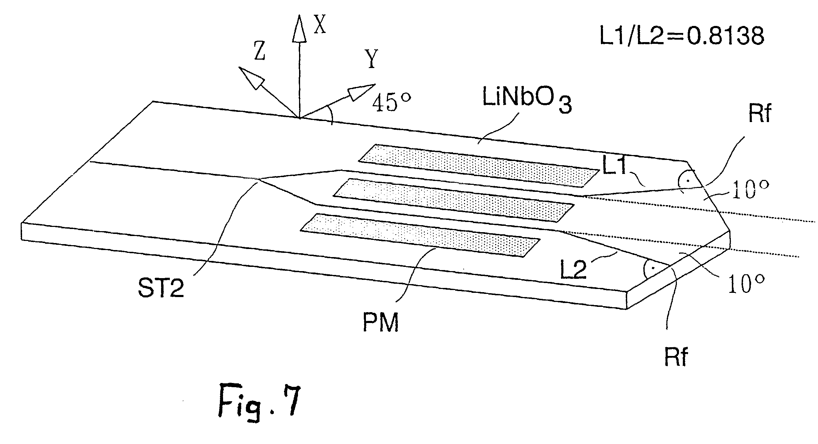

Die Temperaturempfindlichkeit läßt sich gemäß einer vorteilhaften Weiterbildung der Erfindung dadurch umgehen, daß das Material und die Lage der Wellenleiter innerhalb des MIOC so gewählt werden, daß sich die Änderung des Brechungsindexes und des geometrischen Wegunterschieds gerade aufheben, wie dies ausführlich in EP 0 460 268 A1 beschrieben und mit Bezug auf Fig. 7 in einem auf die Erfindung angepaßten Ausführungsbeispiel nachfolgend erläutert wird.

Die Änderungen des Brechungsindexes und der geometrischen Wegunterschiede bei Temperaturänderung lassen sich vermeiden, wenn auf einem Substrat, insbesondere dem üblicherweise verwendeten X-Schnitt-LiNbO$_3$-Substrat die Wellenleiter innerhalb des Phasenmodulators PM unter 45° zur Y-Kristallachse eingebracht und die beiden Ausgangsarme L1, L2 der Y-Verzweigung ST2 nach dem Phasenmodulator PM von der 45° Richtung um +10° bzw. -10° abweichen und bis zur Auskopplung die verschieden langen Wege L1 und L2 durchlaufen, wobei für die Weglängenunterschiede im gewählten Beispiel gilt: L1 /L2 = 0,8138. Wenn man bezogen auf die Weglängenunterschiede höchstens 10 μm als Verzögerung zuläßt, so ergeben sich die Längen der Wege L1 bzw. L2 zu:

$$L1 = 43{,}7 \ \mu m \ und \ L2 = 53{,}7 \ \mu m.$$

Die Fig. 8 zeigt in vereinfachter Darstellung ein konkretes Ausführungsbeispiel einer Drehratenmeßanordnung, die prinzipiell dem Interferometeraufbau gemäß Fig. 7 von EP 0 441 998 A1 entspricht, also in dieser Darstellung keine Skalenfaktorregelung enthält, jedoch um die erfindungsgemäße Michelson-Interferometeranordnung mit Synchrondemodulator zur Stabilisierung der Wellenlänge der Lichtquelle L über einen Temperatur- oder jektionsstromänderung ergänzt ist.

Der linke Teil des faseroptischen Interferometeraufbaus nach Fig. 8 ist dem Leser bereits aus der Erläuterung der Figuren 1 und 2 bekannt. Das Ausgangssignal des Photodetektors PD1 enthält die beiden, bereits anhand der Figuren 3 und 4 erläuterten Signalanteile VD1 (drehratenabhängiges Signal) und VD2 (Michelson-Interferometer-Meßsignal), die gemeinsam zwei Synchrondemodulatoren SYNCD1 und SYNCD2 eingangsseitig beaufschlagen. Hinsichtlich des Demodulationssignals d1(n) für den der Demodulation des drehratenabhängigen Signals VD1 zugeordneten ersten chrondemodulator SYNCD1 wird auf die ausführliche Darstellung in EP 0 441 998 A1 verwiesen. Dieses Demodulationssignal d1(n) ist im linearen Sinn statistisch unabhängig von allen beim Modulationsprozeß auftretenden Signalen, insbesonderen Störsignalen, sowie vom Rückstellsignal PMS für den Phasenmodulator PM. Das vom ersten Synchrondemodulator SYNCD1 demodulierte, drehratenabhängige Signal S1 gelangt (ganz analog zur Darstellung der Fig. 7 In EP 0 441 998 A1) auf einen Integrator und einen Rampengenerator und beaufschlagt dann als drehratenabhängiges Rampensignal AT1 (vgl. Fig. 9A bis 9C) einen Addierer mit Modulo-Bildung, wobei der Addierer eingangsseitig durch einen zweiten Signalanteil AT$_2$ beaufschlagt ist, der sich aus der Summe zweier Anteile zusammensetzt, von denen - in ebenfalls bekannter Weise - der erste Anteil AT21 aus wechselweise aufeinanderfolgenden Werten 0 und π/2 gebildet ist, während der zweite Anteil AT22 aus weitgehend korrelationsfrei aufeinanderfolgenden Werten 0 und π zusammengesetzt ist.

Der aus dem Michelson-Interferometer innerhalb des MIOC gebildete zweite Signalanteil VD2 des Photodetektors PD1 wird durch den zweiten Synchrondemodulator SYNCD2 mit Hilfe des oben anhand der Fig. 6 erläuterten Demodulationssignals d2(n) demoduliert und liefert damit das Korrektursignal S2 an den übergeordneten Mikroprozessor zur Änderung der Temperatur bzw. des Injektionsstroms für die Lichtquelle L. Der für die Erfindung wesentliche Teil innerhalb der Fig. 8 ist durch eine gepunktete Linie umrandet. Ersichtlicherweise beaufschlagt also der zweite verstärkte Signalanteil VD2 aus dem Ausgang des Photodetektors PD1 den mit der Frequenz $f_0$ getakteten zweiten Synchrondemodulator SYNCD2, dessen vom Rampenwert abhängiges Demodulationsvorzeichen mit dem deterministischen Phasenmodulationswert s(n) wechselt und dessen (gemitteltes) Ausgangssignal S2 der inkrementalen wellenlängenabhängigen Phasenverschiebung der beiden reflektierten Lichtstrahlen entspricht.

Die Figuren 9A bis 9C zeigen typische Signalverläufe für verschiedene oben angegebene Betriebszustände des faseroptischen Sagnac-Interferometers, nämlich das Rampensignal AT1, dessen Steigung der Drehrate entspricht, des deterministischen, oben definierten Modulationssignalanteils AT21, des statistischen, ebenfalls oben erläuterten Modulationssignalanteils AT22, des Phasenmodulatorsignals PMS, des Sagnac-Interferometersignals VD1 sowie des Michelson-Interferometersignals VD2 und des daraus durch Demodulation mit dem Signal d2(n) gewonnenen Stell- oder Regelsignals S2 für die Stabilisierung der Wellenlänge der (Halbleiter-)Lichtquelle L.

Die dem Signal S2 zugeordnete, durchgezogene Linie in den Figuren 9A bis 9C entspricht der Null-Linie. Daraus wird ersichtlich, daß das gemittelte Signal S2 bei Fig. 9C positiv ist, während sich bei Fig. 9B als Mittelwert nahezu Null ergibt, bedingt durch die Phasenlage P1.

**Patentansprüche**

1. Faseroptisches Sagnac-Interferometer zur Drehratenmessung, bei dem

   - zwei aus einer Lichtquelle (L) stammende, durch einen Polarisator (P) polarisierte und durch Strahlteilung (ST2) erzeugte Lichtstrahlen in entgegengesetzten Richtungen in eine Faserspule (FS) eingestrahlt und anschließend wiedervereinigt werden,
   - das entstehende Interferenzbild nach Durchlauf durch den Polarisator (P) eine Detektoreinrichtung (PD1) beaufschlagt, deren Ausgangssignal der Lichtintensität des Interferenzbilds entspricht,
   - die beiden Lichtstrahlen mittels eines nach der Strahlteilung und vor der Faserspule liegenden Phasenmodulators (PM) durch ein aus mehreren variablen Anteilen zusammengesetztes, durch eine Modulo-Operation auf einen Wert von $2\pi$ begrenztes Signal (PMS) moduliert werden, wobei
   - der erste Signalanteil (AT1) ein über einen Integrationsprozeß erzeugtes Rampensignal ist, welches nichtreziproke, inkrementale Phasenverschiebungen der beiden Lichtstrahlen kompensiert,
   - ein zweiter Signalanteil (AT2) einen ganzzahligen positiven Wert von $\pi/2$ jeweils für eine Zeit $t_0$ mit $t_0 =$ Laufzeit jedes der Lichtstrahlen durch die Faserspule (FS) im Ruhezustand darstellt, welcher zweite Signalanteil sich aus der Summe zweier Anteile (AT21 und AT22) zusammensetzt, von denen

     -- der erste Anteil (AT21) aus wechselweise aufeinanderfolgenden Werten 0 und $\pi/2$ gebildet ist und
     -- der zweite Anteil (AT22) aus weitgehend korrelationsfrei aufeinanderfolgenden Werten 0 und $\pi$ gebildet ist,

   - das Ausgangsignal der Detektoreinrichtung (PD) mit einem ersten Synchrondemodulator (SYNCD1) demoduliert wird, der angesteuert wird mit dem Produkt (d1(n)) aus vier Faktoren, von denen
   - der erste Faktor konstant den Wert -1 hat,
   - der zweite Faktor -1 ist, wenn der zweite Anteil (AT22) den Wert 0 hat, jedoch +1 ist, wenn der zweite Anteil (AT22) den Wert $\pi$ hat,
   - der dritte Faktor -1 ist, wenn der zweite Anteil (AT22) aus dem letzten vorhergehenden Modulationstakt den Wert 0 hatte, je doch +1 ist, wenn der zweite Anteil (AT22) aus dem vorhergehen den Modulationstakt den Wert $\pi$ hatte,
   - der vierte Faktor -1 ist, wenn der erste Anteil (AT21) den Wert 0 hat, jedoch +1 ist, wenn der erste Anteil (AT21) den Wert $\pi/2$ hat,

   **dadurch gekennzeichnet, daß**

   - ein Teil der Lichtstrahlen nach der Strahlteilung (ST2) und der Phasenmodulation (PM) reflektiert wird und diese Lichtstrahlanteile ebenfalls wiedervereinigt werden und nach Durchlauf durch den Polarisator (P) die Detektoreinrichtung (PD1) beaufschlagen,
   - das Ausgangssignal der Detektoreinrichtung (PD1) zusätzlich mit einem zweiten Synchrondemodulator (SYNCD2) demoduliert wird, der mit dem Produkt (d2(n)) aus zwei Faktoren angesteuert ist, von denen

-- der erste Faktor -1 ist, wenn der erste Anteil (AT21) den Wert 0 hat, jedoch +1 ist, wenn der erste Anteil (AT21) den Wert $\pi/2$ hat,

-- der zweite Faktor -1 ist, wenn das Rampensignal (AT1) einen Wert zwischen 0 und einschließlich $\pi/2$ oder zwischen $\pi$ und einschließlich $3\pi/2$ hat, jedoch +1 ist, wenn das Rampensignal (AT1) einen Wert zwischen $\pi/2$ und einschließlich $\pi$ oder zwischen $3\pi/2$ und einschließlich $2\pi$ hat,

und daß

- das mittels des zweiten Synchrondemodulators (SYNCD2) demodulierte Signal (S2) genutzt wird, um die Wellenlänge der Lichtquelle (L) durch Änderung der Lichtquellentemperatur und/oder des Lichtquelleninjektionsstroms zu variieren.

2. Interferometer nach Anspruch 1, **dadurch gekennzeichnet**, daß das mittels des zweiten Synchrondemodulators (SYNCD2) demodulierte Signal als Steuersignal für eine Kompensationsrechnung für die Lichtquellentemperatur- und/oder die Kompensationsstromänderung in einem übergeordneten Rechnersystem benutzt wird.

3. Interferometer nach Anspruch 1 oder 2, **dadurch gekennzeichnet**, daß die Strahlteilung (ST2) und Phasenmodulation (PM) auf einem integriert optischen Chip (MIOC) vereinigt sind, das als zusätzliches Meßinterferometer dient und an dessen beiden Ausgängen jeweils ein Ende der Faserspule (FS) angeschlossen ist, und daß die Reflektion der Lichtstrahlanteile an den stirnseitigen Übergangsstellen vom integriert optischen Chip (MIOC) zur Faserspule (FS) auftritt.

4. Interferometer nach Anspruch 3, **dadurch gekennzeichnet**, daß im integriert optischen Chip (MIOC) eine geringe Wegdifferenz (1) durch Anschrägen der Übergangsstelle vom integriert optischen Chip (MIOC) zur Faserspule (FS) eingebracht wird.

5. Interferometer nach Anspruch 4, **dadurch gekennzeichnet**, daß der Anschrägwinkel $\alpha$ am integriert optischen Chip im Bereich von 0,5° bis 2°, vorzugsweise zu etwa 1° zur Ausbreitungsrichtung der Lichtstrahlen im integriert optischen Chip (MIOC) gewählt ist.

6. Interferometer nach Anspruch 3, **dadurch gekennzeichnet**, daß die Temperatur des Meßinterferometers gemessen und der Temperaturmeßwert zur Korrektur des über den zweiten Synchrondemodulator (SYNCD2) gewonnenen Meßsignals (S2) im übergeordneten Rechnersystem (PROZESSOR) benutzt wird.

7. Interferometer nach Anspruch 4, **dadurch gekennzeichnet**, daß die Richtung der Lichtwege innerhalb des integriert optischen Chips (MIOC) in Bezug auf die Kristallachsen des Chip-Substrats und hinsichtlich ihrer Weglängen (L1, L2) unter Berücksichtigung der Polarisationsrichtung so gewählt sind, daß die optische Weglängendifferenz bei Temperaturänderung des Chips unverändert bleibt.

8. Faseroptisches Sagnac-Interferometer zur Drehratenmessung, bei dem

- zwei aus einer Lichtquelle (L) stammende, durch einen Polarisator (P) polarisierte und durch Strahlteilung (ST2) erzeugte Lichtstrahlen in entgegengesetzten Richtungen in eine Faserspule (FS) eingestrahlt und anschließend wiedervereinigt werden,
- das entstehende Interferenzbild nach Durchlauf durch den Polarisator (P) eine Detektoreinrichtung (PD1) beaufschlagt, deren Ausgangssignal der Lichtintensität des Interferenzbilds entspricht,
- die beiden Lichtstrahlen mittels eines nach der Strahlteilung und vor der Faserspule (FS) liegenden Phasenmodulator (PM) moduliert werden,
- das verstärkte Photodetektorausgangssignal einem ersten Synchrondemodulator (SYNCD1) zugeführt wird,
- das den Phasenmodulator beaufschlagende Modulationssignal aus der Summe von zwei Anteilen gebildet ist, von denen der erste Anteil aus wechselweise aufeinanderfolgenden Werten Null und $\pi/2$ und der zweite Anteil aus weitgehend korrelationsfrei aufeinanderfolgenden Werten Null und $\pi$ gebildet ist,
- der erste Synchrondemodulator (SYNCD1) mit dem Produkt aus vier Faktoren angesteuert ist, von denen

-- der erste Faktor konstant den Wert -1 hat,
-- der zweite Faktor -1 ist, wenn der zweite Anteil (AT22) den Wert Null hat, jedoch +1 ist, wenn der zweite Anteil (AT22) den Wert $\pi$ hat,
-- der dritte Faktor -1 ist, wenn der zweite Anteil (AT22) aus dem letzten, vorhergehenden Modulationstakt

EP 0 652 417 B1

den Wert Null hatte, jedoch +1 ist, wenn der zweite Anteil (AT22) aus dem vorhergehenden Modulationstakt den Wert $\pi$ hatte, und
-- der vierte Faktor -1 ist, wenn der erste Anteil (AT21) den Wert Null hat, jedoch +1 ist, wenn der erste Anteil (AT21) den Wert $\pi/2$ hat, **dadurch gekennzeichnet**, daß

- ein Teil der Lichtstrahlen nach der Strahlteilung (ST2) und der Phasenmodulation (PM) reflektiert wird und diese Lichtstrahlanteile ebenfalls wiedervereinigt werden und nach Durchlauf durch den Polarisator (P) die Detektoreinrichtung (PD1) beaufschlagen,
- das Ausgangssignal der Detektoreinrichtung (PD1) zusätzlich mit einem zweiten Synchrondemodulator (SYNCD2) demoduliert wird, der mit dem Produkt (d2(n)) aus zwei Faktoren angesteuert ist, von denen

-- der erste Faktor -1 ist, wenn der erste Anteil (AT21) den Wert 0 hat, jedoch +1 ist, wenn der erste Anteil (AT21) den Wert $\pi/2$ hat,
-- der zweite Faktor -1 ist, wenn das Rampensignal (AT1) einen Wert zwischen 0 und einschließlich $\pi/2$ oder zwischen $\pi$ und einschließlich $3\pi/2$ hat, jedoch +1 ist, wenn das Rampensignal (AT1) einen Wert zwischen $\pi/2$ und einschließlich $\pi$ oder zwischen $3\pi/2$ und einschließlich $2\pi$ hat,

und daß

- das mittels des zweiten Synchrondemodulators (SYNCD2) demodulierte Signal (S2) als Faktor für eine rechnerische Kompensation des Interferometer-Skalenfaktors benutzt wird.

## Claims

1. Fibre-optic Sagnac interferometer for measuring the rate of rotation, in which

- two light beams originating from a light source (L), polarized by a polarizer (P) and generated by beam splitting (ST2) are irradiated into a fibre coil (FS) in opposite directions and subsequently recombined,
- the interference pattern created, after passing through the polarizer (P), impinges on a detector device (PD1), the output signal of which corresponds to the light intensity of the interference pattern,
- the two light beams are modulated by means of a phase modulator (PM) located behind the beam splitting and before the fibre coil by a signal (PMS) which is composed of a plurality of variable components and which is limited by a modulo operation to a value of $2\pi$, in which
- a first signal component (AT1) is a ramp signal generated via an integration process which compensates non-reciprocal incremental phase shifts to the two light beams,
- a second signal component (AT2) represents a positive integral value of $\pi/2$, respectively, for a time $t_0$, where $t_0$ = transit time of each of the light beams through the fibre coil (FS) in the non-operative condition, said second signal component being composed of the sum of two components (AT21 and AT22), of which

-- the first component (AT21) is formed of alternately successive values 0 and $\pi/2$, and
-- the second component (AT22) is formed of values 0 and $\pi$ which are successive without correlation to a large extent,

- the output signal of the detector device (PD) is demodulated by a first synchronous demodulator (SYNCD1) triggered by the product (d1(n)) of four factors, of which
- the first factor constantly has the value -1,
- the second factor is -1 if the second component (AT22) has the value 0, but is +1, if the second component (AT22) has the value $\pi$,
- the third factor is -1 if the second component (AT22) derived from the last preceding modulation cycle had the value 0, but is +1, if the second component (AT22) derived from the preceding modulation cycle had the value $\pi$, and
- the fourth factor is -1, if the first component (AT21) has the value 0, but is +1, if the first component (AT21) has the value $\pi/2$,

characterized in that

- a part of the light beams is reflected after the beam splitting (ST2) and the phase modulation (PM) and these light beam components are likewise recombined and, after passing through the polarizer (P), impinge on the detector device (PD1),

- the output signal of the detector device (PD1) is additionally demodulated by a second synchronous demodulator (SYNCD2), which is triggered by the product (d2(n)) of two factors, of which

-- the first factor is -1, if the first component (AT21) has the value 0, but is +1, if the first component (AT21) has the value $\pi/2$,

-- the second factor is -1, if the ramp signal (AT1) has a value between 0 and $\pi/2$ inclusive or between $\pi$ and $3\pi/2$ inclusive, but is +1, if the ramp signal (AT1) has a value between $\pi/2$ and $\pi$ inclusive or between $3\pi/2$ and $2\pi$ inclusive,

and in that

- the signal (S2) demodulated by means of the second synchronous demodulator (SYNCD2) is used to vary the wavelength of the light source (L) by altering the light source temperature and/or the light source injection current.

2. Interferometer according to Claim 1, characterized in that the signal demoluated by means of the second synchronous demodulator (SYNCD2) is used as a control signal for a compensation computation for the light source temperature and/or the compensation current change in a superposed computer system.

3. Interferometer according to Claim 1 or 2, characterized in that the beam splitting (ST2) and phase modulation (PM) are combined in an integrated optical chip (MIOC), which serves as an additional measuring interferometer and with one end of the fibre coil (FS) being respectively connected to each of the two outputs thereof, and in that the reflection of the light beam components occurs at the end wall transition positions from the integrated optical chip (MIOC) to the fibre coil (FS).

4. Interferometer according to Claim 3, characterized in that in the integrated optical chip (MIOC) a marginal path difference (1) is introduced by chamfering the transition position from the integrated optical chip (MIOC) to the fibre coil (FS).

5. Interferometer according to Claim 4, characterized in that the selected chamfer angle $\alpha$ on the integrated optical chip is within the range from 0.5° to 2°, preferably at approximately 1°, to the propagational direction of the light beams in the integrated optical chip (MIOC).

6. Interferometer according to Claim 3, characterized in that the temperature of the measuring interferometer is measured and the temperature value measured is used for the correction of the measurement signal (S2) obtained via the second synchronous demodulator (SYNCD2), in the superposed computer system (PROCESSOR).

7. Interferomter according to Claim 4, characterized in that with respect to both, the crystal axles of the chip substrate and their path lengths (L1, L2) in consideration of the direction of polarization, the direction of the light paths within the integrated optical chip (MIOC) are selected such that the difference in length of the optical path remains stable.

8. Fibre-optic Sagnac interfereometer for measuring the rate of rotation, in which

- two light beams originating from a light source (L), polarized by a polarizer (P) and generated by beam splitting (ST2) are irradiated into a fibre coil (FS) in opposite directions and subsequently recombined,
- the interference pattern created, after passing through the polarizer (P), impinges on a detector device (PD1), the output signal of which corresponds to the light intensity of the interference pattern,
- the two light beams are modulated by means of a phase modulator (PM) located behind the beam splitting and before the fibre coil (FS),
- the amplified photodetector output signal is fed to a first synchronous demodulator (SYNCD1),
- the modulation signal impinging on the phase modulator is formed of the sum of two components, of which the first component is formed of alternately successive valus zero and $\pi/2$ and the second component is formed of values zero and $\pi$ which are successive without correlation to a large extent,
- the first synchronous demodulator (SYNCD1) is triggered by the product of four factors, of which

-- the first factor's constant value is -1,

-- the second factor is -1, if the second component (AT22) has the value zero, but is +1, if the second component (AT22) has the value $\pi$,

-- the third factor is -1, if the second component (AT22) derived from the last preceding modulation cycle had the value zero, but is +1, if the second component (AT22) derived from the preceding modulation cycle had the value $\pi$, and

-- the fourth factor is -1, if the first component (AT21) has the value zero, but is +1, if the first component (AT21) has the value $\pi/2$,

characterized in that

- a part of the light beams after both, the beam splitting (ST2) and the phase modulation (PM) is reflected and these light beam components are likewise recombined and impinge on the detector device (PD1) after passing through the polarizer (P),

- the output signal of the detector device (PD1) is additionally demodulated by a second synchronous demodulator (SYNCD2), which is triggered by the product (d2(n)) of two factors, of which

-- the first factor is -1, if the first signal component (AT21) has a zero value, but is +1, if the first component (AT21) has a value $\pi/2$,

-- the second factor is -1, if the ramp signal (AT1) has a value between either 0 and $\pi/2$ inclusive or $\pi$ and $3\pi/2$, but is +1, if the ramp signal (AT1) has a value between either $\pi/2$ and $\pi$ inclusive or $3\pi/2$ and $2\pi$,

and in that

- the signal (S2) demodulated by means of the second synchronous demodulator (SYNCD2) is used as a factor for an arithmetic compensation of the interferometer scale factor.

**Revendications**

1. Interféromètre de Sagnac à fibre optique pour mesurer la vitesse de rotation dans lequel

- deux faisceaux lumineux émis par une source de lumière (L), polarisés par un polariseur (P) et produits par division des rayons (ST2) sont injectés dans des sens opposés dans une bobine de fibre (FS) et réunis à nouveau,

- l'image interférentielle produite est transmise, après le passage par le polariseur (P), à un dispositif de détection (PD1) dont le signal de sortie correspond à l'intensité lumineuse de l'image interférentielle,

- les deux faisceaux lumineux sont modulés au moyen d'un modulateur de phase (PM) placé en amont de la bobine de fibre par un signal (PMS) limité par une opération modulo à une valeur de $2\pi$,

- la première composante de signal (AT1) étant un signal de rampe formé par un processus d'intégration, qui compense des déphasages incrémentaux non réciproques des deux faisceaux lumineux,

- une seconde composante de signal (AT2) représentant une valeur positive entière de $\pi/2$, à savoir respectivement pour un temps $t_0$ avec $t_0$ = temps de propagation de chacun des faisceaux lumineux par la bobine de fibre (FS) à l'état de repos, ladite seconde composante de signal se composant de la somme de deux composantes (AT21 et AT22) dont

-- la première composante (AT21) est formée par des valeurs 0 et $\pi/2$ qui se succèdent alternativement, et dont

-- la seconde composante (AT22) est formée par des valeurs 0 et $\pi$ consécutives dans une large mesure exemptes de corrélation,

- le signal de sortie du dispositif de détection (PD) est démodulé avec un premier démodulateur synchrone (SYNCD1) qui est commandé avec le produit (d1(n)) de quatre facteurs, dont

- le premier facteur a de manière constante la valeur -1,

- le deuxième facteur est -1 si la seconde composante (AT22) a la valeur 0, mais +1 si la seconde composante (AT22) à la valeur $\pi$,

- le troisième facteur est -1 si la seconde composante (AT22) du dernier cycle de modulation précédent avait la valeur 0, mais +1 si la seconde composante (AT22) du cycle de modulation précédent avait la valeur $\pi$,

- le quatrième facteur est -1 si la première composante (AT21) a la valeur 0, mais +1 si la première composante (AT21) a la valeur $\pi/2$,

**caractérisé en ce**

-   qu'une partie des faisceaux lumineux est réfléchie après la division des rayons (ST2) et la modulation de phase (PM) et que ces composantes des faisceaux lumineux sont également réunies à nouveau et transmises, après le passage par le polariseur (P), au dispositif de détection (PD1),
-   que le signal de sortie du dispositif de détection (PD1) est démodulé, en supplément, avec un second démodulateur synchrone (SYNCD2) qui est commandé avec le produit (d2(n)) de deux facteurs, dont

--   le premier facteur est -1 si la première composante (AT21) a la valeur 0, mais +1 si la première composante (AT21) a la valeur $\pi/2$,
--   le second facteur est -1 si le signal de rampe (AT1) a une valeur comprise entre 0 et $\pi/2$ compris ou entre $\pi$ et $3\pi/2$ compris, mais +1 si le signal de rampe (AT1) a une valeur comprise entre $\pi/2$ et $\pi$ compris ou entre $3\pi/2$ et $2\pi$ compris,

et que
-   le signal (S2) démodulé au moyen du second démodulateur synchrone (SYNCD2) est utilisé pour varier la longueur d'onde de la source de lumière (L) par modification de la température de la source de lumière et/ou du courant d'injection de la source de lumière.

2.  Interféromètre selon la revendication 1, caractérisé en ce que le signal démodulé au moyen du second démodulateur synchrone (SYNCD2) est utilisé comme signal de commande pour un calcul de compensation pour la variation de la température de la source de lumière et/ou du courant de compensation dans un système d'ordinateur supérieur.

3.  Interféromètre selon la revendication 1 ou 2, caractérisé en ce que la division des rayons (ST2) et la modulation de phase (PM) sont réunies sur une puce optique intégrée (MIOC) qui sert d'interféromètre de mesure supplémentaire et aux deux sorties de laquelle est reliée à chaque fois une extrémité de la bobine de fibre (FS), et que la réflexion des composantes des faisceaux lumineux se produit aux points de transition frontaux entre la puce optique intégrée (MIOC) et la bobine de fibre (FS).

4.  Interféromètre selon la revendication 3, caractérisé en ce que dans la puce optique intégrée (MIOC) est réalisée une légère différence de parcours (1) par biseautage du point de transition entre la puce optique intégrée (MIOC) et la bobine de fibre (FS).

5.  Interféromètre selon la revendication 4, caractérisé en ce que l'angle d'inclinaison $\alpha$ sur la puce optique intégrée est choisi dans la plage de 0,5° à 2°, de préférence d'environ 1°, par rapport à la direction de propagation des rayons lumineux dans la puce optique intégrée (MIOC).

6.  Interféromètre selon la revendication 3, caractérisé en ce que la température de l'interféromètre de mesure est mesurée et que la valeur de la température mesurée est utilisée dans le système d'ordinateur supérieur (PROZESSOR) pour la correction du signal de mesure (S2) obtenu par l'intermédiaire du second démodulateur synchrone (SYNCD2).

7.  Interféromètre selon la revendication 4, caractérisé en ce que la direction des chemins optiques à l'intérieur de la puce optique intégrée (MIOC) par rapport aux axes de cristal du substrat de la puce et en ce qui concerne leurs longueurs de chemin (L1, L2) est choisie en tenant compte de la direction de polarisation de telle façon que la différence des chemins optiques lors de la variation de la température de la puce reste inchangée.

8.  Interféromètre de Sagnac à fibre optique pour mesurer la vitesse de rotation, dans lequel

-   deux faisceaux lumineux émis par une source de lumière (L), polarisés par un polariseur (P) et produits par division des rayons (ST2) sont injectés dans des sens opposés dans une bobine de fibre (FS) et réunis à nouveau,
-   l'image interférentielle produite est transmise, après le passage par le polariseur (P), à un dispositif de détection (PD1) dont le signal de sortie correspond à l'intensité lumineuse de l'image interférentielle,
-   les deux faisceaux lumineux sont modulés au moyen d'un modulateur de phase (PM) placé en amont de la bobine de fibre (FS),

- le signal de sortie amplifié du photodétecteur est transmis à un premier modulateur synchrone (SYNCD1),
- le signal de modulation transmis au modulateur de phase est formé à partir de la somme de deux composantes dont la première composante est formée par les valeurs zéro et $\pi/2$ qui se succèdent alternativement, et dont la seconde composante est formée par les valeurs zéro et $\pi$ consécutives dans une large mesure exemptes de corrélation,
- le premier modulateur synchrone (SYNCD1) est commandé avec le produit de quatre facteurs, dont

    -- le premier facteur a de manière constante la valeur -1,
    -- le deuxième facteur est -1 si la seconde composante (AT22) a la valeur zéro, mais +1 si la seconde composante (AT22) a la valeur $\pi$,
    -- le troisième facteur est -1 si la seconde composante (AT22) du dernier cycle de modulation précédent avait la valeur zéro, mais +1 si la seconde composante (AT22) du cycle de modulation précédent avait la valeur $\pi$, et
    -- le quatrième facteur est -1 si la première composante (AT21) a la valeur zéro, mais +1 si la première composante (AT21) a la valeur $\pi/2$,

  **caractérisé en ce**

- qu'une partie des faisceaux lumineux est réfléchie après la division des rayons (ST2) et la modulation de phase (PM) et que ces composantes des faisceaux lumineux sont également réunies à nouveau et transmises, après le passage par le polariseur (P), au dispositif de détection (PD1),
- que le signal de sortie du dispositif de détection (PD1) est démodulé, en supplément, avec un second démodulateur synchrone (SYNCD2) qui est commandé avec le produit (d2(n)) de deux facteurs, dont

    -- le premier facteur est -1 si la première composante (AT21) a la valeur 0, mais +1 si la première composante (AT21) a la valeur $\pi/2$,
    -- le second facteur est -1 si le signal de rampe (AT1) a une valeur comprise entre 0 et $\pi/2$ compris ou entre $\pi$ et $3\pi/2$ compris, mais +1 si le signal de rampe (AT1) a une valeur comprise entre $\pi/2$ et $\pi$ compris ou entre $3\pi/2$ et $2\pi$ compris,

  et que

- le signal (S2) démodulé au moyen du second démodulateur synchrone (SYNCD2) est utilisé comme facteur pour une compensation mathématique du facteur d'échelle de l'interféromètre.

Fig. 1

Fig. 2

Fig. 3

Fig. 4

MIOC

Fig. 5

**ADDIERER MIT MODULOBILDUNG**

2

2

-1

-1

+

+

d2(n)

b$_\pi$ b$_{\pi/2}$
**RAMPEN-GENERATOR**

r(n) s(n)
**MODULATIONS-SIGNAL GENERATOR**

Fig. 6

L1/L2=0.8138

Fig. 7

Fig. 8

AT1

AT21

AT22

PMS

VD1

VD2

S2

$t$

Fig. 9A

Fig. 9B

EP 0 652 417 B1

EP 0 652 417 B1

AT1

AT22

PMS

VD1

VD2

S2

t

PI#0

*Fig. 9C*